# EUROPEAN PATENT APPLICATION

(11) **EP 2 687 133 A1**
(43) Date of publication of application: **22.01.2014**
(21) Application number: 13165329.7
(22) Date of filing: 25.04.2013
(51) Int. Cl.: A47J 31/36

(54) **A device for making coffee**

(30) Priority: 19.07.2012 CN 201210250672
(71) Applicant: Ningbo Sunlight Electrical Appliance Co Ltd, Ningbo City, Zhejiang 315032 (CN)
(72) Inventor: Yang, Ningen, 315032 Ningbo City (CN); Jiao, Wenshu, 315032 Ningbo City (CN); Tu, Yinghao, 315032 Ningbo City (CN)
(74) Representative: Grünecker, Kinkeldey, Stockmair & Schwanhäusser

(57) **Abstract**

A device for making coffee comprises: a socket frame configured to respectively provide a coffee capsule inlet and outlet on the front and rear portion thereof; a socket cavity configured to be positioned in the socket frame and include a brewing cavity therein, outside wall of the socket frame comprise axial guide slots and guide bumps for guiding the socket cavity to move axially, and inside wall of the socket cavity comprise lateral slots and guide bumps for guiding the socket cavity to move lateral to be locked, and vice versa; and support rods configured to be positioned on left and right sides of the socket frame, wherein, head ends of the support rods pass through the respective widows positioned on the left and right sides of the socket frame and hold the coffee capsule in the socket frame. The device adopts the socket structure, the guide slots and guide bumps in the socket structure are opened when they moved axially, and they are locked when they are moved laterally, The transmission mechanism for performing straight line movement and the turnover mechanism for performing tilting motion are replaced by such socket guide structure. Therefore, the device of the present invention has a simple structure, easy, safe and reliable operation, and does not have water leakage under 30 Bar pressure.

## Description

### Cross Reference to Related Applications

This application claims the benefit of Chinese Patent Application No. 201210250672.9, filed on July 19, 2012, which is incorporated herein by reference in its entirety as part of this application.

### Technical Field

The application relates to a device for making coffee, and in particular, to a device for making coffee capsules.

### Background of the Application

Lots of devices for making coffee capsules are proposed as the coffee capsules are pupular. For example, Chinese Patent No. 200910037547.8 discloses a device for making coffee capsule, which comprising a capsule cover, a transmission mechanism for controlling the capsule cover to perform straight line movement, and a turnover mechanism for controlling the capsule cover to perform tilting motion. The device provides two mechanisms. i.e., the transmission mechanism and the turnover mechanism, therefore, the two mechanisms must be operated synchronously, in addition, a rotate handle is integrated with a link mechanism, and the link mechanism need a larger space for movement, which results in increased volume, more complex structure and more components of the device for making coffee, and thus assembly and maintenance thereof are difficult, production efficiency thereof is low and manufacture and maintenance costs thereof are higher.

### Summary of the Application

Consideration for the above issues in the conventional art, the present invention provides a device for making coffee with a simple structure, small volume, convenient assembly and maintenance and low cost.

The above object is achieved through the following technical solutions.

A device for making coffee, comprising:
a socket frame configured to comprise a top socket frame and a low socket frame, an inlet for a coffee capsule is provided in the middle of the top socket frame and an outlet for the coffee capsule is provided in the middle of the low socket frame, windows which are mutually symmetric are provided between the inlet and outlet, a sealed cap for supplying hot water is provided on an end of the socket frame;
a socket cavity configured to be position in the socket frame and comprise a brewing cavity connecting with the sealed cap and a coffee liquid cavity connecting with the brewing cavity: the brewing cavity to be positioned the inside of the socket frame, and slots of the L shape to be set on the surface of the brewing cavity, and the silica gel seals the joint between the brewing cavity and an inlet for water.
wherein, inside wall of the socket frame comprise axial guide slots and guide bumps for guiding the socket cavity to move axially, and outside wall of the socket cavity comprise lateral slots and guide bumps for guiding the socket cavity to move lateral to be locked, and vice versa. The slots of the L shape to be set on the surface of the brewing cavity, the positioning bump configured to be position in the socket frame in order to meet the slots of the L shape, meantime, by the limitation of the positioning bump, the brewing cavity can move along the axial direction of a slot in order to pull or push and rotate along the radial direction in order to lock or unlock.

Several axial guide slots and lateral guide slots configured to be positioned on the outside wall of the socket cavity at equal interval, wherein, tail ends of the axial guide slots vertically connect with head ends of the lateral guide slots.

Four guide bumps configured to be positioned on the low portion of the inside wall of the socket cavity, which are corresponding to the axial guide slots or lateral guide slots and are configured to be slideable to be locked with the axial guide slots or lateral guide slots.

Lateral guide bumps configured to be parallel with the lateral guide slots are provided above the axial guide slots.

Lateral slots configured to be positioned on the top portion of the inside wall of the socket frame, which are corresponding to the lateral guide bumps and are configured to be slideable to be locked with the lateral guide bumps on the outside wall of the socket cavity.

The sealed cap for supplying hot water comprises: a hot water tube inlet configured to be positioned on the top portion of the sealed cap; and a sealed ring and a filter net configured to be positioned in the sealed cap.

A sliding plate assembly for opening or closing the coffee capsule inlet configured to be positioned on the periphery the coffee capsule inlet and the coffee capsule inlet configured to be positioned in the middle of the top socket frame.

The sliding plate assembly comprises: axial rails configured to be positioned on the top socket frame; a sliding plate configured to be slideable along the axial rails; a sliding plate frame configured to be fastened on the top stock frame; and tension springs configured to be connected to top sides of the sliding plate and low sides of the sliding plate frame.

Support rods configured to be positioned on left and right sides of the socket frame, wherein, head ends of the support rods pass through the corresponding window respectively positioned on the left and right sides of the socket frame and hold the coffee capsule in the socket frame.

Each of the support rods comprises a rod head end, a straight rod and a rod tail end, wherein, a tooth bump configured to hold against the coffee capsule is positioned on a top edge of the rod head end; a middle portion of the rod head end is arc-shaped surface configured to hold the coffee capsule; and a low edge of the arc-shaped surface is circular arc surface configured to be corresponding to the outside wall of the brewing cavity.

The device of the present invention adopts the socket structure, the guide slots and guide bumps in the socket structure are opened when they moved axially, and they are locked when they are moved laterally. The transmission mechanism for performing straight line movement and the turnover mechanism for performing tilting motion are replaced by such socket guide structure. Therefore, the device of the present invention has a simple structure, easy, safe and reliable operation, and does not have water leakage under 30 Bar pressure without any metal components.

### Brief Description of the Drawing

Figure 1 schematically shows a structure exploded view according to the device for making coffee of the present application.

Figure 2 schematically shows an assembly view of components in fig .1.

Figure 3 schematically shows a perspective view of a socket cavity.

Figure 4a schematically shows a structure of a top stock frame.

Figure 4b schematically shows a C side view of fig. 4a.

Figure 5a schematically shows state view in which the device for making coffee is opened and the coffee capsule is in the device.

Figure 5b schematically shows a section view of fig. 5a along B-B.

Figure 6a schematically shows a state view in which the device for making coffee according to the present invention is locked.

Figure 6b schematically shows a section view of fig. 6a along A-A.

Figure 7 schematically shows a perspective view of the structure of a support rod.

Figure 8a schematically shows a perspective view in the opened state.

Figure 8b schematically shows a state view in which the socket cavity is pushed to the highest position but is not rotated to close position.

Figure 8c schematically shows a partial enlarged view of fig. 8b.

### Detailed Description

Hereinafter, the embodiments of the present invention will be described in detail with reference to the drawings.

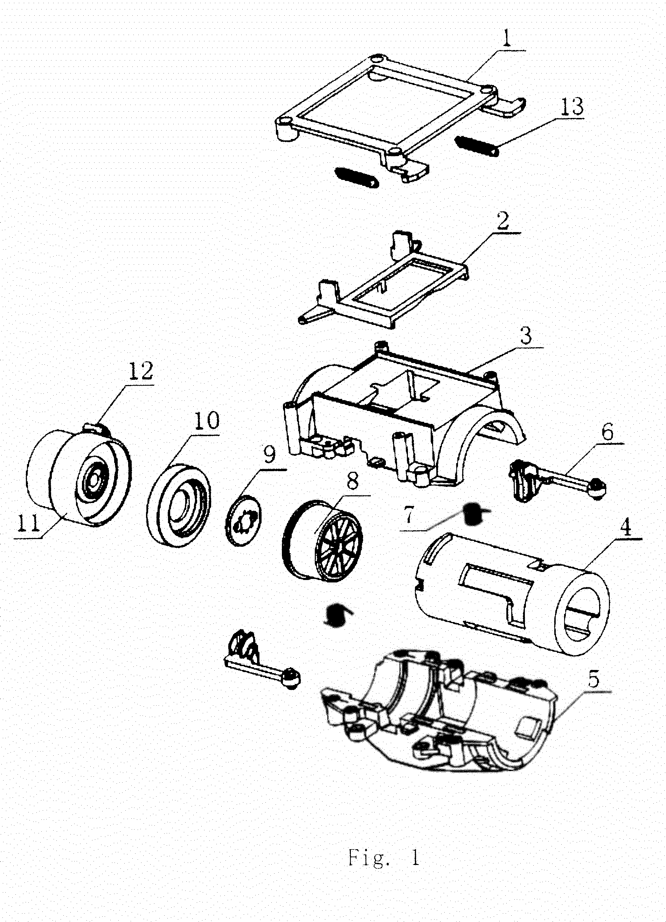

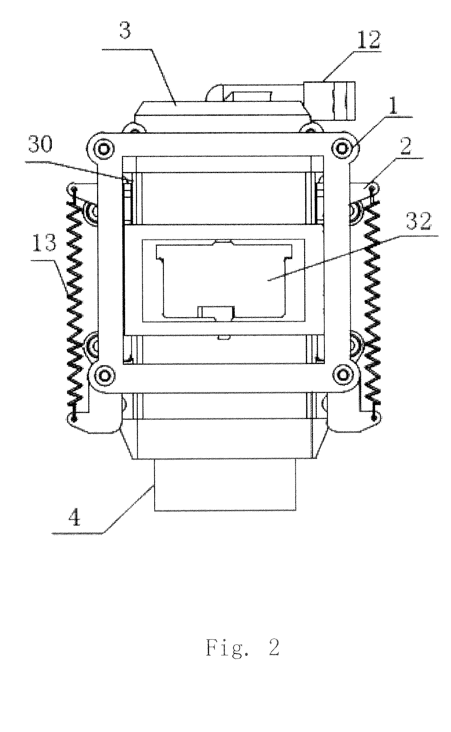

As shown in figs. 1 and 2, the device for making coffee comprises a stock frame formed by closure of a top stock frame 3 and a low stock frame 5. The top stock frame 3 provides an inlet 32 for the coffee capsule in the middle thereof, and a sliding plate assembly for opening or closing the inlet. The sliding plate assembly comprises axial rails 30 provided on the top stock frame 3, a sliding plate 2 for sliding along the axial rails 30, a sliding plate frame 1 fastened on the top stock frame 3, and two tension springs 13 connecting to a top side of the sliding plate 2 and a low side of the sliding plate frame 1 respectively. The sliding plate 2 may slide up and down along the axial rails 30 to open or close the inlet 32 for the coffee capsule 8.

As shown in figs 1, 3 and 5, a sealed cap 11 is in the top portion of a stock frame. The top portion of the sealed cap 11 provides hot water tube inlet 12. A sealed ring 10 and a filter net 9 are provided in the sealed cap 11. When the socket cavity 4 is pushed to the top end, the coffee capsule 8 can be put into a brewing cavity 40 of which the outside wall seals the inlet 32 and an outlet 52. A top ring convexity 110 and a low ring convexity 111 respectively clamp the top socket 3 and the low socket 5 to seal the sealed cap 11, and hot water is injected from the hot water tube inlet into the brewing cavity.

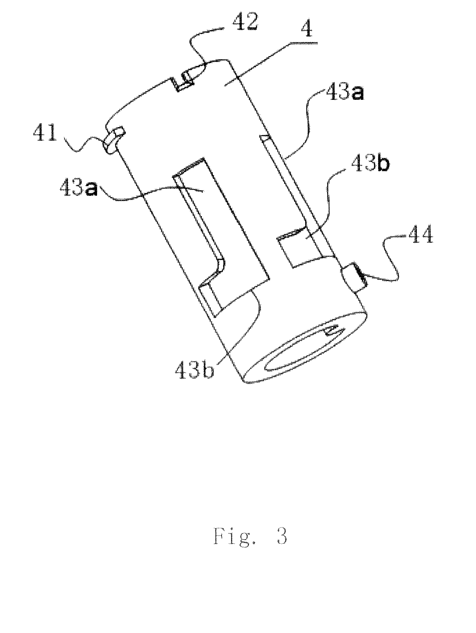

As shown in figs. 1 and 3, axial guide slots 43a and lateral guide slots 43b are evenly arranged on the outside wall of the socket cavity 4. In this embodiment, four axial guide slots 43a and four lateral guide slots 43b are provided at equal interval, wherein, tail ends of the axial guide slots 43a vertically connect with head ends of the lateral guide slots 43b, and directions of tail ends of the lateral guide slots 43b are the same. A lateral bump 41 is provided over the axial guide slots 43a. Two opens 42, which are mutually symmetric, are provided on top surface of the socket cavity 4. The top portion of the socket cavity 4 is the brewing cavity 40. Coffee drinking will flow out from a liquid outlet 44 in the low cavity.

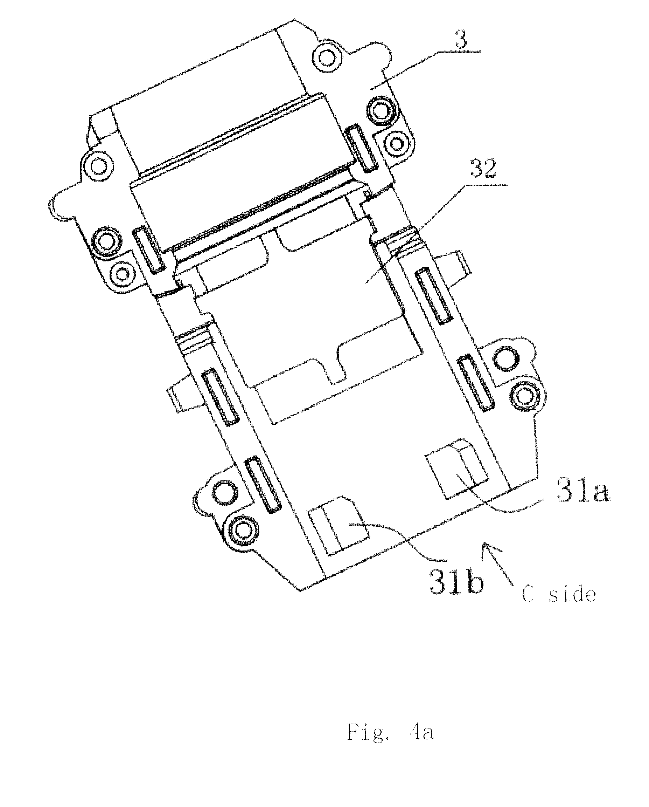

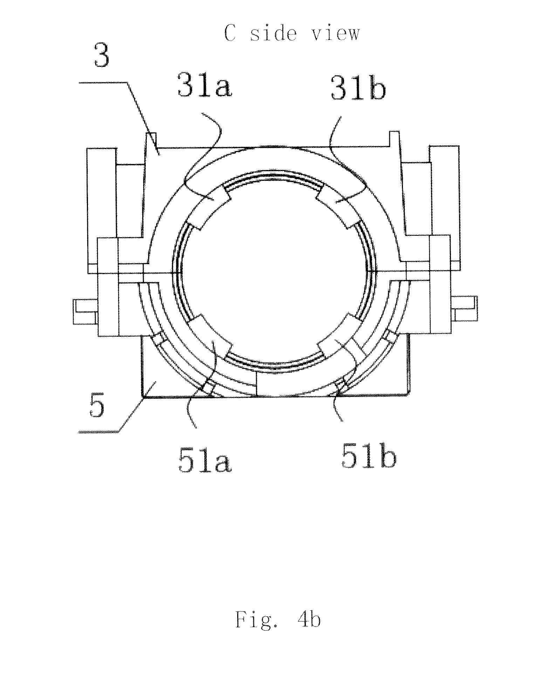

As shown in figs. 3, 4 and 5, two guide bumps are provided on the low side of inside wall of each of the top stock frame 3 and the low stock frame 5. Specifically, two guide bumps 31a and 31b are provided on the low side of inside wall of the top stock frame 3 and two guide bumps 51a and 51b are provided on the low side of inside wall of the low stock frame 5, the guide bumps 31a, 31b and the guide bumps 51a, 51b are respectively corresponding to and movably contacting the axial guide slots 43a and the lateral guide slots 43b provided on the outside wall of the socket cavity 4.

In this embodiment, guide slots 43 are provided on the outside wall of the socket cavity 4. Alternatively, guide slots 43 may be provided on the inside walls of the stock frame 3 and 5. Alternatively, guide bumps 31 and 51 of the stock frame 3 and 5 may be provided on the outside wall of the socket cavity 4.

In this embodiment, the directions of the all tail ends of the lateral guide slots 43b on the outside wall of the socket cavity are clockwise, when the socket cavity is rotated anticlockwise, the socket cavity will be overlapped and locked. Alternatively, the directions of the all tail ends of the lateral guide slots 43b on the outside wall of the socket cavity may be anticlockwise, when the socket cavity is rotated clockwise, the socket cavity will be overlapped and locked. In this embodiment, the rotation angle is 39-40°. The person skilled in the art should understand that the rotation angle may be various based on the volume of the socket.

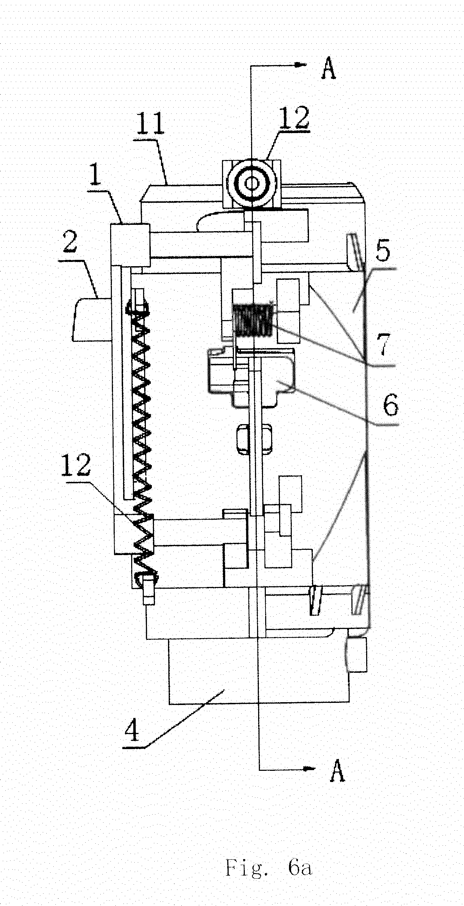

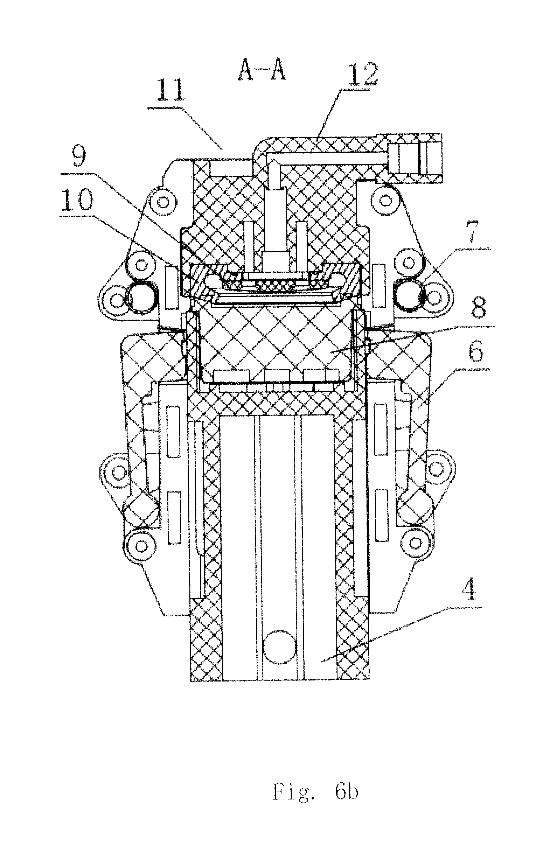

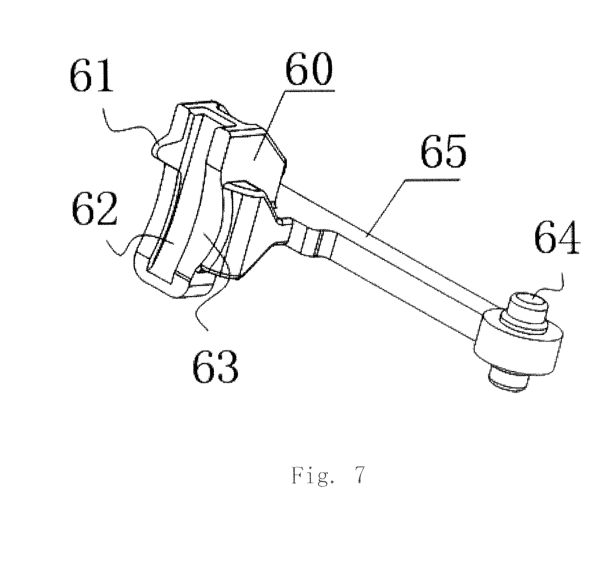

As shown in figs. 6-8, the bilateral symmetric support rod 6 comprises a rod head end 60, straight rod 65 and a rod tail end 64. Specifically, the rod tail end 64 is fastened on the left and right sides of the socket frame; the rod head end 60 is clamped in left and right windows of outside walls of the top and low socket frames by torsional springs 7; a tooth bump 61 for holding against the coffee capsule 8 is provided on the top edge of the rod head end 60; the middle portion of the rod head end 60 is arc-shaped surface 62 for holding the coffee capsule; and the low edge of the arc-shaped surface 62 is circular arc surface 63 which is corresponding to the outside wall of brewing cavity 40.

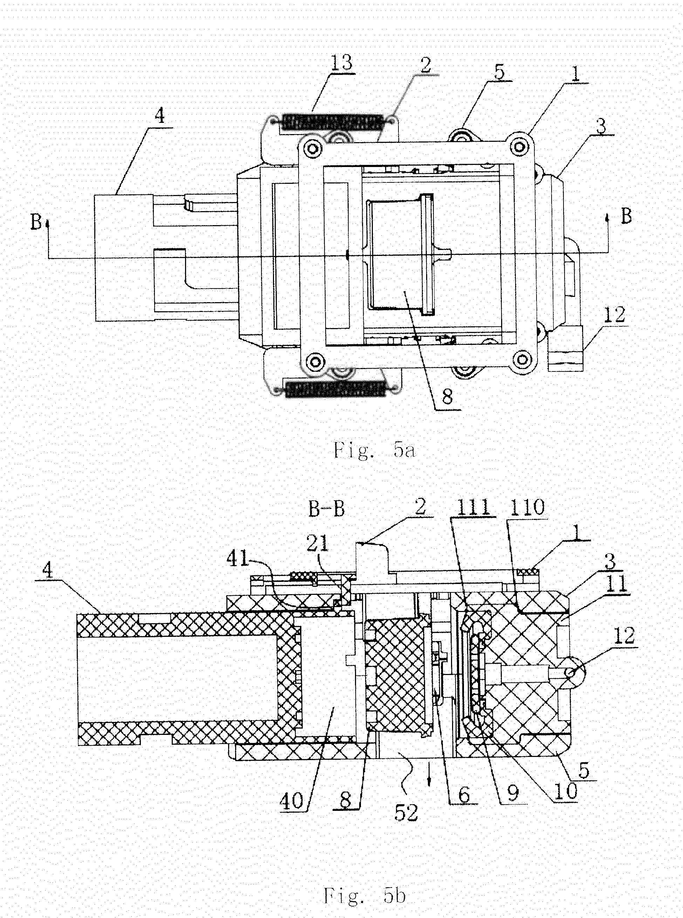

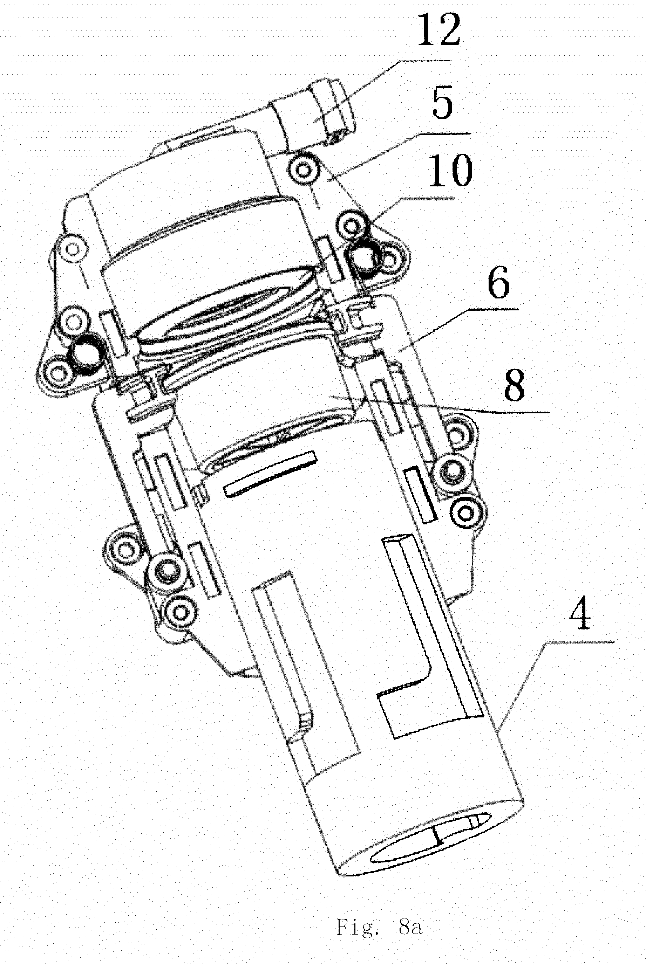

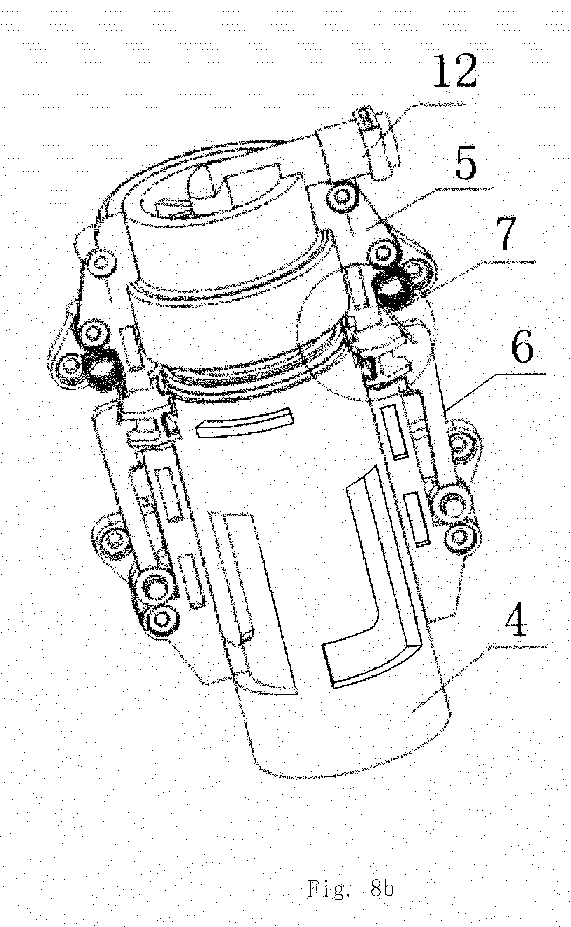

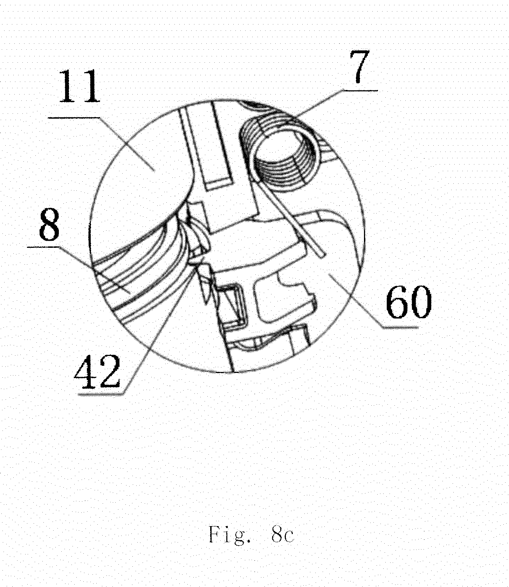

As shown in figs. 3-5 and 8, when the socket cavity 4 is pulled out to a position for assembling the coffee capsule, the brewing cavity 40 is in the middle of the socket frame, then the sliding plate is pulled down and the inlet 32 is opened to allow the coffee capsule 8 to be put into the device. When the socket cavity is pushed forward, the guide bump 31a on the socket frame will be limited to only perform axial movement in the guide slot 43a on the socket cavity 4; when the tail end of the guide slot 43a on the socket cavity 4 contacts the guide bump 31a on the socket frame, the axial movement stop and the socket cavity 4 is rotatable under this circumstance. When the socket cavity 4 is rotated anticlockwise, the guide bump 31a on the socket frame 31a will contact the tail end of the lateral guide slot 43b on the socket cavity 4 and then the rotation is stop; under this circumstance, the lateral guide slot 43b on the socket cavity 4 will be locked the guide bump 31a on the socket frame, the socket cavity 4 is limited to be closed and cannot be moved, other three guide slots 43 on the socket cavity 4 are also respectively overlapped and locked with lateral guide bumps 31b, 51a and 51b on the inside wall of the socket frame. Under this circumstance, a closed space for making the coffee capsule is formed between the brewing cavity 40 and the sealed cap 11. The left and right support rods 6 are connected to location holes on the socket frame by the tail ends 64, and the rod head end 60 can be moved in the radial direction. One end of each of left and right support rod torsional springs is fastened on the socket frame and the rod head end 60 was stuck by the other end. The two (left and right) torsional springs respectively control resetting of the two (left and right) support rods. As shown in figs. 5 and 8, when the coffee capsule 8 is put into the device through the capsule inlet 32, the coffee capsule 8 is clamped in the socket frame by the arc-shaped surface 62 on the rod head end 60. When the stock cavity 4 is pushed forward, the coffee capsule 8 will be put into the inside of the brewing cavity 40; as the brewing cavity 40 is proceeded to move forward, the coffee capsule 8 will contact circular arc surface 63 on the rod head end 60 so that the left and right support rods can be spaced, and the coffee capsule 8 will be entirely put into the inside of the brewing cavity 40. After the coffee is made, the socket cavity 4 is drawn back. Under this circumstance, the tooth bumps 61 hold the coffee capsule on gaps 42 positioned on the brewing cavity 40, since left and right support rods are respectively activated be left and right torsional springs 6, as shown in fig. 8c. The socket cavity is further drawn, the coffee capsule 8 will be drawn out of the brewing cavity 40 under the effect of the tooth bumps 61 on the left and right rod head ends, and will be discharged from the making device through the coffee capsule outlet 52. As shown in fig. 5, in the process for unloading the socket cavity 4, a node 21 on the sliding plate 2 tightly holds against a lateral bump 41 on the socket cavity 4 under the effect of left and right tension springs 13, and the socket cavity 4 automatically reset by the push of the sliding plate 2.

The operation of the device for making coffee is as follows. Firsty, the socket cavity 4 is rotated anticlockwise to be drawn out, so that the brewing cavity 40 is under an opening in the middle of the socket frame, as shown in fig. 8a. Under this circumstance, the coffee capsule 8 can be put into the device through the coffee capsule inlet 32, wherein, the coffee capsule 8 is hold in the socket frame through the left and right support rods, and will be moved in straight line under the limitation of the guide bumps 31 and 51 respectively provided on the top and low socket frames when the socket cavity is moved axially; in such process, the left and right support rods are spaced towards to opposite two sides by the socket cavity, the coffee capsule 8 is entirely put into the inside of the brewing cavity 40; the socket cavity only can be rotated clockwise after the linear movements stop due to the limitation of the axial guide slots 43 on the socket cavity; when the rotation stop, the brewing cavity 40 and the sealed cap 11 are sealed to allow the making coffee. After the making coffee, the socket cavity 4 is rotated anticlockwise to be popped out to the open position under effect of the left and right tension springs 13, as shown in rigs 5 and 8b; in such process, the coffee capsule 8 is discharged from the coffee capsule outlet 52 under the left and right support rods 6, and the process for making coffee is over. If more coffee is required, the above operation will be repeated again.

## Claims

1. A device for making coffee, comprising:
a socket frame configured to comprise a top socket trame and a low socket frame, an inlet for a coffee capsule configured to be positioned in the middle of the top socket frame and an outlet for the coffee capsule configured to be positioned in the middle of the low socket frame, windows which are mutually symmetric configured to be positioned between the inlet and outlet, and a sealed cap for supplying hot water configured to be positioned on an end of the socket frame;
a socket cavity configured to be positioned in the socket frame and the socket cavity comprise a brewing cavity connecting with the sealed cap and a coffee liquid cavity connecting with the brewing cavity;
wherein, outside wall of the socket frame comprise axial guide slots and guide bumps for guiding the socket cavity to move axially, and inside wall of the socket cavity comprise lateral slots and guide bumps for guiding the socket cavity to move lateral to be locked, and vice versa..

2. The device according to claim 1, further comprising:
four axial guide slots and lateral guide slots configured to be positioned on the outside wall of the socket cavity at equal interval, wherein, tail ends of the axial guide slots vertically connect with head ends of the lateral guide slots.

3. The device according to claim 1, further comprising:
one or more guide bumps configured to be positioned on the low portion of the inside wall of the socket cavity, which are corresponding to the axial guide slots or lateral guide slots and are configured to be slideable to be locked with the axial guide slots or lateral guide slots.

4. The device according to claim 1, further comprising:
lateral guide bumps configured to be parallel with the lateral guide slots are positioned above the axial guide slots.

5. The device according to claim 4, further comprising:
lateral slots configured to be positioned on the top portion of the inside wall of the socket frame, which are corresponding to the lateral guide bumps and are configured to be slideable to be locked with the lateral guide bumps on the outside wall of the socket cavity.

6. The device according to claim 1, wherein, the sealed cap for supplying hot water comprises:
a hot water tube inlet configured to be positioned on the top portion of the sealed cap; and
a sealed ring and a filter net configured to be positioned in the sealed cap.

7. The device according to claim 1, further comprising:
a sliding plate assembly for opening or closing the coffee capsule inlet configured to be positioned on the periphery the coffee capsule inlet, and the coffee capsule inlet configured to be positioned in the middle of the top socket frame.

8. The device according to claim 7, wherein, the sliding plate assembly comprises:
axial rails configured to be positioned on the top socket frame;
a sliding plate configured to be slideable along the axial rails;
a sliding plate frame configured to be fastened on the top stock frame; and
tension springs configured to be connected to top sides of the sliding plate and low sides of the sliding plate frame.

9. The device according to claim 1, further comprising:
support rods configured to be positioned on left and right sides of the socket frame, wherein, head ends of the support rods pass through the corresponding windows respectively positioned on the left and right sides of the socket frame and hold the coffee capsule in the socket frame.

10. The device according to claim 9, wherein, each of the support rods comprises a rod head end, a straight rod and a rod tail end,
wherein, a tooth bump configured to hold against the coffee capsule is positioned on a top edge of the rod head end;
a middle portion of the rod head end is arc-shaped surface configured to hold the coffee capsule; and
a low edge of the arc-shaped surface is circular arc surface configured to be corresponding to the outside wall of the brewing cavity.
